# EUROPÄISCHE PATENTSCHRIFT

(11) **EP 3 116 925 B1**
(45) Veröffentlichungstag und Bekanntmachung des Hinweises auf die Patenterteilung: **02.01.2019**
(21) Anmeldenummer: 15707160.6
(22) Anmeldetag: 03.03.2015
(51) Int. Cl.: C08G 18/48, C08G 18/67, C08G 18/75, C08G 18/40, C08G 18/42, C09J 175/16, C08L 23/08, C08L 33/12, C08F 30/02, C08K 5/521, C09J 133/00, B32B 7/12, B32B 27/30, C08F 2/48

(54) **UV-REAKTIVER SCHMELZKLEBSTOFF FÜR DIE LAMINIERUNG TRANSPARENTER FOLIEN**
UV-REACTIVE HOT-MELT ADHESIVE FOR LAMINATING TRANSPARENT FILMS
ADHÉSIF THERMOFUSIBLE DURCISSABLE AUX UV POUR STRATIFIER DES FILMS TRANSPARENTS

(30) Priorität: 11.03.2014 DE 102014204465
(43) Veröffentlichungstag der Anmeldung: 18.01.2017
(73) Patentinhaber: Henkel AG & Co. KGaA, 40589 Düsseldorf (DE)
(72) Erfinder: MORGENEYER, Thomas, 73441 Bopfingen (DE); LOTZ, Jürgen, 65399 Kiedrich (DE); MECKEL-JONAS, Claudia, 40597 Düsseldorf (DE)
(86) Internationale Anmeldenummer: PCT/EP2015/054423
(87) Internationale Veröffentlichungsnummer: WO 2015/135800

(56) Entgegenhaltungen:
- WO-A1-98/36325
- WO-A1-2005/105857
- WO-A1-2012/014562
- WO-A1-2013/068298
- WO-A2-2009/077865
- US-A1- 2012 172 484

## Beschreibung

Die vorliegende Erfindung betrifft einen UV-härtbaren Schmelzklebstoff für die Laminierung transparenter Folien, insbesondere auf Formkörper aus Holzwerkstoffen, die mit Melamin oder PVC beschichtet sind. Die Schmelzklebstoffe enthalten ein UV-härtbares Urethanacrylat, monomere und/oder oligomere (Meth)Acrylate und mindestens einen Photoinitiator. Ebenfalls Gegenstand der Erfindung sind Verfahren zum Kaschieren einer Folie auf einen Formkörper unter Verwendung dieser Schmelzklebstoffe und die derart hergestellten Verbundmaterialien.

Bei der Fertigung von Möbelteilen mit Hochglanzoberflächen ist es bekannt, Span- oder MDF-Platten mit bis zu 10 verschiedenen Lackschichten zu beschichten. Dies erfordert aber einen hohen technologischen Aufwand für Lackierung, Trocknung oder UV-Härtung sowie Zwischenschliff nach den einzelnen Lackierungsschritten. Aufgrund des hohen Aufwands solcher Lackierungstechniken, wurden verschiedene Techniken entwickelt, um Hochglanzfolien auf entsprechende Träger zu kaschieren. Bei der Kaschierung werden handelsübliche feuchtigkeitsvernetzende PUR-Schmelzklebstoffe verwendet, die bei der Aushärtung CO₂ abgeben, was die Oberflächenqualität verschlechtern kann. Ähnliche Probleme treten auch bei der Verwendung handelsüblicher PUR-Schmelzklebstoffe zur Beschichtung einer Oberfläche und der anschließenden Lackierung mit UV-Lack auf. Zudem können die gefertigten Möbelteile nicht sofort nach der Kaschierung weiterverarbeitet, werden, da der reaktive Polyurethanklebstoff noch nicht ausgehärtet ist.

In der WO 2009/077865 A2 wird die Herstellung und Verwendung UV-härtbarer Schmelzklebstoffe für die Oberflächenveredlung von Holzwerkstoffplatten beschrieben. Hier wird auf die Platte ein UV-härtbarer Schmelzklebstoff aufgetragen und zusammen mit einem anschließend aufgetragenen UV-Lack ausgehärtet. Nachteilig bei diesem System ist, dass die Adhäsion auf Melaminplatten oder PVC-Beschichtungen begrenzt ist.

Aufgabe der vorliegenden Erfindung war es daher, für Holzwerkstoffe mit Melaminoberflächen oder PVC-Beschichtungen eine technische Lösung zu entwickeln, die technisch einfach ist und die Kaschierung von Hochglanzfolien auf die genannten Oberflächen ermöglicht um mittels Hochglanzfolien anstelle der Lackierung Hochglanzmöbelteile zu fertigen. Dabei war es das Ziel ein System zur Verfügung zu stellen, das es ermöglicht die gefertigten Möbelteile sofort nach der Folienkaschierung weiterzuverarbeiten und auf Lackier- und Zwischenschliffschritte zu verzichten.

Die Erfinder haben überraschenderweise gefunden, dass sich diese Aufgabe durch eine UV-härtbare Schmelzklebstoffzusammensetzung lösen lässt, die UV-härtbare Urethan(meth)acrylate in Kombination mit weiteren monomeren und/oder oligomeren (Meth)Acrylaten enthält.

In einem ersten Aspekt betrifft die Erfindung daher eine UV-härtbare Schmelzklebstoffzusammensetzung enthaltend
(a) mindestens ein UV-härtbares Urethan(meth)acrylat, wobei das Urethan(meth)acrylat erhältlich ist durch das Umsetzen eines NCO-funktionellen Polyurethan-Präpolymers mit einem molaren Überschuss hydroxy- und/oder amin-modifizierter (Meth)Acrylate;
(b) mindestens ein (Meth)Acrylat-Monomer oder -Oligomer, wobei das mindestens eine (Meth)Acrylat-Monomer oder -Oligomer ein säuremodifiziertes (Meth)Acrylat mit einer Säurezahl von 50 bis 400 mg KOH/g, vorzugsweise 100 bis 200 mg KOH/g, umfasst; und
(c) mindestens einen Photoinitiator.

In einem weiteren Aspekt betrifft die Erfindung Verfahren zum Kaschieren einer Folie, insbesondere einer Folie auf Basis von PMMA und/oder Polyester, auf einen Formkörper, insbesondere einen mit Melamin oder PVC beschichteten Formkörper, dadurch gekennzeichnet, dass die hierin beschriebene UV-härtbare Schmelzklebstoffzusammensetzung auf eine Oberfläche des Formkörpers, eine Oberfläche der Folie oder beide aufgetragen und der Formkörper und die Folie anschließend verklebt werden.

In noch einem weiteren Aspekt erfasst die Erfindung auch auf den Verbund aus einem Formkörper, insbesondere einem Formkörper mit Melamin- oder PVC-Beschichtung, und einer damit verklebten Folie hergestellt nach dem hierin beschriebenen Verfahren.

Schließlich betrifft die Erfindung auch die Verwendung der UV-härtbaren Schmelzklebstoffzusammensetzung wie hierin beschrieben zur Verklebung einer Folie mit einem Formkörper.

Die im vorliegenden Text angegebenen Molekulargewichte beziehen sich, soweit nicht anders angegeben, auf das gewichtsmittlere Molekulargewicht (Mw). Alle Molekulargewichtsangaben beziehen sich, soweit nicht anders angegeben ist, auf Werte, wie sie durch Gelpermeationschromatographie (GPC) gemäß der Norm DIN 55672-1:2007-08 erhältlich sind.

Die im vorliegenden Text angegebenen Säurezahlen beziehen sich, soweit nicht anders angegeben, auf Werte, wie sie durch wie sie durch Titration gemäß der Norm DIN EN ISO 660:2009-10 erhältlich sind.

Die im vorliegenden Text angegebenen Hydroxylzahlen beziehen sich, soweit nicht anders angegeben, auf Werte, wie sie durch Titration gemäß der Norm DIN 53240-2:2007-11 erhältlich sind.

Die im vorliegenden Text angegebenen NCO-Gehalte beziehen sich, soweit nicht anders angegeben, auf Werte wie sie gemäß der Norm DIN EN ISO 11909:2007-05 erhältlich sind.

"Mindestens ein", wie hierin verwendet, bedeutet 1 oder mehr, d.h. 1, 2, 3, 4, 5, 6, 7, 8, 9 oder mehr. Bezogen auf einen Inhaltsstoff bezieht sich die Angabe auf die Art des Inhaltsstoffs und nicht auf die absolute Zahl der Moleküle. "Mindestens ein Acrylat" bedeutet somit beispielsweise mindestens eine Art von Acrylat, d.h. dass eine Art von Acrylat oder eine Mischung mehrerer verschiedener Acrylate verwendet werden kann. Zusammen mit Gewichtsangaben bezieht sich die Angabe auf alle Verbindungen der angegebenen Art, die in der Zusammensetzung/Mischung enthalten sind, d.h. dass die Zusammensetzung über die angegebene Menge der entsprechenden Verbindungen hinaus keine weiteren Verbindungen dieser Art enthält.

Alle Prozentangaben, die im Zusammenhang mit den hierin beschriebenen Zusammensetzungen gemacht werden, beziehen sich, sofern nicht explizit anders angegeben auf Gew.-%, jeweils bezogen auf die entsprechende Mischung.

Überraschend wurde gefunden, dass die hierin beschriebenen Schmelzklebstoffe eine sehr gute Adhäsion an Melamin- und PVC-Oberflächen sowie Folien auf Basis von PMMA und/oder Polyester zeigen, UV-stabil und vergilbungsfrei sind und daher die Kaschierung transparenter Folien, beispielsweise auf bereits mit Dekoren versehene Oberflächen, ermöglichen, unter UV-Strahlung schnell chemisch vollständig aushärten und daher die verklebten Verbundmaterialien direkt nach der Kaschierung weiterverarbeitbar sind, was signifikant kürzere Maschinenlängen, insbesondere gegenüber bisherigen Lackierverfahren, und Inlineverfahren mit hohen Vorschubgeschwindigkeiten ermöglicht.

Die Isocyanat (NCO)-funktionellen PU-Präpolymere, insbesondere NCO-terminierte PU-Präpolymere, werden durch Umsetzen eines Polyol oder einer Polyolmischung mit einem stöchiometrischen Überschuss von Polyisocyanat erhalten. Die bei der Herstellung des Präpolymers eingesetzten Polyole können alle üblicherweise für die Polyurethansynthese eingesetzten Polyole, beispielsweise Polyesterpolyole, Polyetherpolyole, Polyesteretherpolyole, Polycarbonatpolyole oder Mischungen von zwei oder mehr der genannten sein.

Polyetherpolyole können aus einer Vielzahl von Alkoholen hergestellt werden, die eine oder mehrere, primäre oder sekundäre Alkoholgruppen enthalten. Als Starter für die Herstellung der Polyether können beispielsweise folgende Verbindungen oder Mischungen dieser Verbindungen eingesetzt werden: Wasser, Ethylenglykol, Propylenglykol, Glycerin, Butandiol, Butantriol, Trimethylolethan, Pentaerythrit, Hexandiol, 3-Hydroxyphenol, Hexantriol, Trimethylolpropan, Oktandiol, Neopentylglykol, 1,4-Hydroxymethylcyclohexan, Bis(4-hydroxyphenyl)dimethylmethan und Sorbit. Bevorzugt werden Ethylenglykol, Propylenglykol, Glycerin und Trimethylolpropan eingesetzt, besonders bevorzugt Ethylenglykol und Propylenglykol, und in einer besonders bevorzugten Ausführungsform wird Propylenglykol eingesetzt.

Als cyclische Ether zur Herstellung von vorstehend beschriebenen Polyethern kommen Alkylenoxide wie Ethylenoxid, Propylenoxid, Butylenoxid, Epichlorhydrin, Styroloxid oder Tetrahydrofuran oder Gemische aus diesen Alkylenoxiden in Betracht. Bevorzugt werden Propylenoxid, Ethylenoxid oder Tetrahydrofuran oder Gemische aus diesen verwendet. Besonders bevorzugt wird Propylenoxid oder Ethylenoxid oder Gemische aus diesen verwendet. Ganz besonders bevorzugt wird Propylenoxid verwendet.

Polyesterpolyole können beispielsweise durch Umsetzung von niedermolekularen Alkoholen, insbesondere von Ethylenglykol, Diethylenglykol, Neopentylglykol, Hexandiol, Butandiol, Propylenglykol, Glycerin oder Trimethylolpropan mit Caprolacton hergestellt werden. Ebenfalls als polyfunktionelle Alkohole zur Herstellung von Polyesterpolyolen geeignet sind 1,4-Hydroxymethylcyclohexan, 2-Methyl-1,3-propandiol, 1,2,4-Butantriol, Triethylenglykol, Tetraethylenglykol, Polyethylenglykol, Dipropylenglykol, Polypropylenglykol, Dibutylenglykol und Polybutylenglykol.

Weitere geeignete Polyesterpolyole sind durch Polykondensation herstellbar. So können difunktionelle und/oder trifunktionelle Alkohole mit einem Unterschuss an Dicarbonsäuren oder Tricarbonsäuren oder Gemischen aus Dicarbonsäuren oder Tricarbonsäuren, oder deren reaktiven Derivaten, zu Polyesterpolyolen kondensiert werden. Geeignete Dicarbonsäuren sind beispielsweise Adipinsäure oder Bernsteinsäure und ihre höhere Homologen mit bis zu 16 C-Atomen, ferner ungesättigte Dicarbonsäuren wie Maleinsäure oder Fumarsäure sowie aromatische Dicarbonsäuren, insbesondere die isomeren Phthalsäuren, wie Phthalsäure, Isophthalsäure oder Terephthalsäure. Als Tricarbonsäuren sind beispielsweise Zitronensäure oder Trimellithsäure geeignet. Die genannten Säuren können einzeln oder als Gemische aus zwei oder mehr davon eingesetzt werden. Besonders geeignete Alkohole sind Hexandiol, Butandiol, Ethylenglykol, Diethylenglykol, Neopentylglykol, 3-Hydroxy-2,2-dimethylpropyl-3-hydroxy-2,2-dimethylpropanoat oder Trimethylolpropan oder Gemische aus zwei oder mehr davon. Besonders geeignete Säuren sind Phthalsäure, Isophthalsäure, Terephthalsäure, Adipinsäure oder Dodekandisäure oder deren Gemische. Polyesterpolyole mit hohem Molekulargewicht umfassen beispielsweise die Umsetzungsprodukte von polyfunktionellen, bevorzugt difunktionellen Alkoholen (gegebenenfalls zusammen mit geringen Mengen an trifunktionellen Alkoholen) und polyfunktionellen, bevorzugt difunktionellen Carbonsäuren. Anstatt freier Polycarbonsäuren können (wenn möglich) auch die entsprechenden Polycarbonsäureanhydride oder entsprechende Polycarbonsäureester mit Alkoholen mit bevorzugt 1 bis 3 C- Atomen eingesetzt werden. Die Polycarbonsäuren können aliphatisch, cycloaliphatisch, aromatisch oder heterocyclisch oder beides sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Dodekandisäure, Phthalsäure, Isophthalsäure, Terephthalsäure, Trimellithsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäure oder Trimerfettsäure oder Gemische aus zwei oder mehr davon geeignet.

Aus Lactonen, beispielsweise auf Basis von epsilon-Caprolacton, auch "Polycaprolactone" genannt, oder Hydroxycarbonsäuren, beispielsweise omega-Hydroxycapronsäure, erhältliche Polyester, können ebenfalls eingesetzt werden.

Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäureenthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden.

Polycarbonatpolyole können beispielsweise durch die Reaktion von Diolen, wie Propylenglykol, Butandiol-1,4 oder Hexandiol-1,6, Diethylenglykol, Triethylenglykol oder Tetraethylenglykol oder Gemischen dieser Diole mit Diarylcarbonaten, beispielsweise Diphenylcarbonaten, oder Phosgen, erhalten werden.

Das Molekulargewicht (Mw) der zur Synthese des Präpolymers verwendeten Polyole liegt vorzugsweise im Bereich von 320 bis 20000 g/mol, insbesondere 330 bis 4500 g/mol. Die nominelle Funktionalität kann im Bereich von 2 bis 4,5 liegen. Das PU-Präpolymer weist vorzugsweise ein Polyether, Polyester oder Polyether/Polyester-Backbone auf.

Als Polyetherpolyol wird in bestimmten Ausführungsformen Polypropylenlgykol bevorzugt verwendet, insbesondere Polypropylenglykol mit einem Molekulargewicht (Mw) von etwa 2000 g/mol und/oder einer Hydroxylzahl von etwa 50 bis 60 mg KOH/g.

In weiteren Ausführungsformen wird als Polyesterpolyol ein Copolyester auf Basis von 1,6-Hexandiol und Adipinsäure oder 1,6-Hexandiol und 1,12-Dodekandisäure, insbesondere mit einer Hydroxylzahl von 25 bis 35 mg KOH/g verwendet.

In besonders bevorzugten Ausführungsformen werden als Polyol Mischungen verschiedener Polyole eingesetzt, insbesondere Mischungen von Polyetherpolyolen, insbesondere Polypropylenglykol, und Polyesterpolyolen, insbesondere den oben beschriebenen Copolyestern. Das Masseverhältnis von Polyetherpolyol zu Polyesterpolyol kann in solchen Mischungen von 25:1 bis 1:1 betragen, insbesondere 7:1 bis 3:1. Insbesondere werden Polyetherpolyole, vorzugsweise Polypropylenglykole, in Mengen von 20 bis 70 Gew.-%, besonders bevorzugt 25 bis 50 Gew.-%, bezogen auf die Zusammensetzung des Präpolymers eingesetzt. Die Polyesterpolyole werden vorzugsweise in Mengen von 0 bis 15 Gew.-%, vorzugsweise 2 bis 10 Gew.-%, ebenfalls bezogen auf die Zusammensetzung des Präpolymers eingesetzt.

In weiter bevorzugten Ausführungsformen werden als Polyolkomponente die oben beschriebenen Polyether- und/oder Polyesterpolyole bzw. Mischungen davon in Kombination mit Hydroxy- und/oder Carboxygruppen-haltigen Poly(meth)acrylat(en) sowie zusätzlich mindestens einem Copolymer von Ethylen mit Maleinsäureanhydrid oder Acrylsäure und/oder mindestens einem oxidierten Polyethylenwachs eingesetzt. Die Poly(meth)acrylate haben dabei vorzugsweise eine Hydroxylzahl von weniger als 20 mg KOH/g, vorzugsweise von 5 bis 10 mg KOH/g und eine Säurezahl von weniger als 10 mg KOH/g. Die Copolymere von Ethylen mit Maleinsäureanhydrid oder Acrylsäure sind insbesondere Polyethylenwachse mit 1-5 Gew.-%, vorzugsweise 2-3 Gew.-% Maleinsäurenanhydrideinheiten und/oder 5-20 Gew.-% Acrylsäureeinheiten, bezogen auf die Copolymere. Derartige Wachse werden in Mengen 0,5 bis 8 Gew.-%, insbesondere 3 bis 5 Gew.%, bezogen auf die Klebstoffzusammensetzung eingesetzt. Die oben erwähnten Poly(meth)acrylate werden dabei in Mengen von 0 bis 40 Gew.-%, vorzugsweise 15 bis 30 Gew.-%, bezogen auf die Zusammensetzung des Präpolymers, eingesetzt.

Als Polyetherpolyole sind beispielsweise Voranol™ 2000L (Dow Chemical), als Polyesterpolyole Dynacoll™ 7380 oder Dynacoll™ 7360 (Evonik), als Methlymethacrylat/Butylmethacrylat Copolymer Elvacite 2013 (Lucite International, Inc.), Dynacoll AC 1420, Dynacoll AC 1520, Dynacoll AC 1620, Dynacoll AC 1630, Dynacoll AC 1920 oder Dynacoll AC 2740 (Evonik) einsetzbar. Als PE Wachse sind beispielsweise Honeywell AC 575 P, AC 578 P, AC 5180, AC 5120, AC 540 und AC 645 P einsetzbar.

Der stöchiometrische Überschuss von Polyisocyanat beträgt bezogen auf das molare Verhältnis von NCO-zu OH-Gruppen 1,25:1 bis 2,5:1, vorzugsweise 1,5:1 bis 2:1 beträgt.

Als Polyisocyanat kann jede geeignete Verbindung mit zwei oder mehr Isocyanatgruppen eingesetzt werden. Geeignete Polyisocyanate schließen ein, sind aber nicht beschränkt auf, Alkylendiisocyanate, Cycloalkylendiisocyanate, aromatische Diisocyanate und aliphatischaromatische Diisocyanate. Konkrete Beispiele für geeignete Verbindungen umfassen, ohne darauf beschränkt zu sein, Ethylendiisocyanat, Ethylidendiisocyanat, Propylendiisocyanat, Butylendiisocyanat, Trimethylendiisocyanat, Hexamethylendiisocyanat (HDI), Methylen-bis-(4-cyclohexyldiisocyanat) (HMDI), Isophorondiisocyanat (IPDI), Dichlorohexamethylendiisocyanat, Furfurylidendiisocyanat, Cyclopentylen-1,3-diisocyanat, Cyclohexylen-1,4-diisocyanat, Cyclohexylen-1,2-diisocyanat. Weitere schließen verschiedene Isomere von Toluoldiisocyanat ein, wie zum Beispiel 2,4-Toluoldiisocyanate, 2,6-Toluoldiisocyanate und/oder Mischungen davon, meta-Xylendiioscyanat und para-Xylendiisocyanat, 4,4'-Diphenylmethandiisocyanat, 2,4'-Diphenylmethandiisocyanat, 2,2- diphenylpropan-4,4'-diisocyanat, Tetramethylxylendiisocyanat, 1,4-Naphthylediisocyanate, 1,5-Naphthyldiisocyanate, m-Phenyldiisocyanate, p-Phenyldiisocyanat, Diphenyl-4,4'-diisocyanat, Azobenzol-4,4'-diisocyanat, Diphenylsulfon-4,4'-diisocyanat, 1-Chlorobenzol-2,4-diisocyanat, 4,4',4"-Triisocyanatotriphenylmethan, 1,3,5-Triisocyanatobenzol, 2,4,6-Triisocyanatotoluol, 4,4'-Dimethyldiphenylmethan-2,2',5,5'-tetraisocyanat, 4-Chloro-1,3-phenyldiisocyanat, 1,5-Tetrahydro-naphthalindiisocyanat, 4,4'-Dibenzyldiisocyanat and 1,2,4-Benzoltriisocyanat, 1-Methoxyphenyl-2,4-diisocyanat.

Geeignete polymere Polyisocyanate schließen cycloaliphatische und/oder aromatische Polyisocyanate und/oder Polymethylenpolyphenylenpolyisocyanate (polymeres MDI) ein. Auch bifunktionelle Präpolymere, also Präpolymere mit zwei Isocyanatgruppen, aus Polyester und Diisocyanat, wie z.B. IPDI, sind geeignet. Trimerisate können beispielsweise in Anteilen von 10 % bezogen auf den NCO-Gehalt der Isocyanate verwendet werden.

Bevorzugte Diisocyanate sind Methylendiphenyldiisocyanate (MDI), wie 4,4'-Methylendiphenyldiisocyanat, 2,4'-Methylendiphenyldiisocyanat oder 2,2'-Methylendiphenyldiisocyanat, Isophorondiisocyanat (IPDI) und/oder das Trimer davon, Toluoldiisocyanate (TDI) und/oder Trimere davon, Methylen-bis-(4-cyclohexyldiisocyanat) (HMDI), und/oder Hexamethylendiisocyanat (HDI) und/oder deren Trimere, und/oder Tetramethylxylylendiisocyanat (TMXDI). Besonders bevorzugt sind aliphatische Diisocyanate wie HMDI, IPDI und HDI.

Als Polyisocyanate sind beispielsweise Desmodur® I, Desmodur® 44MC, Desmodur® W, Desmodur® N3200, Desmodur® N3300 (Bayer) und/oder Vestanat® T1890/100 (Evonik) einsetzbar.

Das mindestens eine NCO-terminierte PU-Präpolymer ist daher vorzugsweise ein aliphatisches Isocyanat-terminiertes Polyurethan-Präpolymer aus einer Polyether-/Polyesterpolyolmischung wie oben definiert und einem aliphatischen Diisocyanat, wie IPDI.

Die Polyole und Polyisocyanate werden mit im Stand der Technik gut bekannten Verfahren zu den NCO-terminierten/-funktionellen PU-Präpolymeren umgesetzt, üblicherweise in Gegenwart eines geeigneten Katalysators, beispielsweise eines Zinn-haltigen Katalysators wie DBTL (Dibutylzinndilaurat) in Mengen von 0,01 bis 0,5 Gew.-%, insbesondere von 0,05 bis 0,1 Gew.-%, bezogen auf die eingesetzten Edukte.

Die entsprechenden Präpolymere weisen üblicherweise einen NCO-Gehalt von 0,5 bis 5 Gew.-% auf und haben eine nominelle mittlere NCO-Funktionalität von 1 bis 2.

Das Molekulargewicht (Mw) des Präpolymers liegt insbesondere im Bereich von 1500 g/mol bis 30000 g/mol, insbesondere bevorzugt von 5000 g/mol bis 20 000 g/mol.

Das NCO-funktionelle PU-Präpolymer wird dann in einem nächsten Schritt mit geeigneten (Meth)Acrylaten, d.h. hydroxy- und/oder amin-modifizierten (Meth)Acrylaten, zu einem Urethanacrylat umgesetzt. Unter einem hydroxy- beziehungsweise amin-modifizierten (Meth)Acrylat wird in Sinne der Anmeldung ein Meth(Acrylat) verstanden, dass Hydroxygruppen beziehungsweise Aminogruppen trägt. Dazu wird ein molarer Überschuss an (Meth)Acrylaten eingesetzt, um alle freien NCO-Gruppen umzusetzen und so ein im Wesentlichen Isocyanat-freies Urethanacrylat mit einem NCO-Gehalt von weniger als 0,1 % zu erzeugen.

Geeignete hydroxy- und/oder amin-modifizierte (Meth)Acrylate schließen monomere und/oder oligomere (Meth)acrylate mit einer Acrylatfunktionalität von 1 bis 6 und einer Hydroxy- und/oder Aminfunktionalität, vorzugsweise Hydroxyfunktionalität, von 1 bis 4 ein. Geeignete Verbindungen schließen ein, ohne darauf beschränkt zu sein, Propylenglycolacrylat, 2-Hydroxyethylacrylat, Epoxyacrylate, insbesondere Bisphenol A Epoxydiacrylat, aliphatische und aromatische Urethanacrylate, optional ethoxylierte Pentaerythritol-Tri- und/oder -Tetraacrylatester, Dipentaerythritol-Penta- und/oder Hexaacrylatester und Caprolactonacrylat. Es können auch Mischungen der vorgenannten eingesetzt werden. Geeignete (Meth)Acrylate sind beispielsweise unter den Handelsnamen Bisomer® PPA6, Bisomer® HEA (Geo Specialty), Ebecryl® 600, Ebecryl® 3700, Ebecryl® 8210, Ebecryl® 8254, Ebecryl® 8310, PETIA und DPHA (Allnex), Urethan-Acrylat-00-22, Miramer® M340, Miramer® M600, Genomer® 2255 und Genomer® 2263 (Rahn).

Der Anteil der genannten (Meth)Acrylate an der Klebstoffzusammensetzung liegt insbesondere im Bereich von 2 bis 20 Gew.-%, vorzugsweise von 2 bis 15 Gew.-%, noch bevorzugter von 5 bis 10 oder von 4 bis 8 Gew.-%. Die genaue Menge der (Meth)Acrylate wird so gewählt, dass ein signifikanter Überschuss an Hydroxy- und/oder Aminfunktionalität, insbesondere Hydroxyfunktionalität, gegenüber der nach dem ersten Reaktionsschritt vorhandenen Isocyanatfunktionalität vorliegt. Vorzugsweise liegt die Hydroxylzahl des Urethanacrylats im Bereich von 1 bis 50 mg KOH/g, besonders bevorzugt 1 bis 8 mg KOH/g.

Das Molekulargewicht (Mw) des Urethanacrylats liegt im Bereich von mehr als 2000 g/mol, insbesondere 5000 bis 30000 g/mol. Die Polydispersität liegt vorzugsweise im Bereich von 5 bis 15.

Nach der Umsetzung mit den hydroxy- und/oder amin-modifizierten (Meth)Acrylaten weist das Urethanacrylatpolymer vorzugsweise eine Acrylatfunktionalität von 2 bis 6 auf.

Ein erfindungsgemäßer Schmelzklebstoff oder Schmelzklebstoffzusammensetzung enthält ferner mindestens ein (Meth)Acrylat-Monomer oder -Oligomer, das mindestens ein säuremodifiziertes (Meth)Acrylat mit einer Säurezahl von 50 bis 400 mg KOH/g, vorzugsweise 100 bis 200 mg KOH/g umfasst. Unter einem säuremodifizierten (Meth)Acrylat ist im Sinne der Anmeldung ein (Meth)Acrylat-Monomer oder -Oligomer mit einer Säurezahl von mindestens 20 mg KOH/g zu verstehen. Die (Meth)Acrylat-Monomere oder -Oligomere sind vorzugsweise Mischungen verschiedener (Meth)Acrylate und können monomere und/oder oligomere Komponenten umfassen. Es ist bevorzugt, dass derartige Mischungen sowohl monomere als auch oligomere Komponenten umfassen.

Oligomere Komponenten haben vorzugsweise ein Molekulargewicht (Mw) von 500 bis 5000 g/mol und tragen mindestens zwei Acrylat- oder Methacrylat-Gruppen, bevorzugt 2 bis 6 Acrylat- oder Methacrylat-Gruppen. Es kann sich dabei um bekannte Urethanacrylate, Polyesteracrylate, Epoxyacrylate, Melaminacrylate usw. handeln oder Gemische davon. Bevorzugt sind insbesondere Epoxyacrylate oder Polyesteracrylate. Solche oligomeren Komponenten sind kommerziell erhältlich. Es ist bevorzugt, dass diese eine hohe Funktionalität aufweisen und beispielsweise mehr als zwei ungesättigte Gruppen enthalten.

Der erfindungsgemäße Schmelzklebstoff kann außerdem monomere Komponenten enthalten, die nur eine ungesättigte Acrylat-/Methacrylat-Gruppe aufweisen. Diese haben ein Molekulargewicht (Mw) von 100 bis 1000 g/mol. Es kann sich dabei um die bekannten mono-(Meth)Acrylatderivate handeln, beispielsweise Ester der (Meth)acrylsäure mit einwertigen Alkoholen. Auch Ester mit aliphatischen Alkoholen, die im Alkylrest noch eine weitere OH-Gruppe tragen, sind geeignet. Besonders geeignet sind Umsetzungsprodukte auf Basis von Polyetherpolyolen mit (Meth)acrylsäuren mit einem Molekulargewicht (Mw) von 200 bis 1000g/mol.

In verschiedenen Ausführungsformen ist das mindestens eine (Meth)Acrylat-Monomer oder -Oligomer eine Mischung von monomeren und/oder oligomeren (Meth)Acrylaten ist, insbesondere eine Mischung von monomeren und oligomeren (Meth)Acrylaten, die das mindestens eine säuremodifizierte (Meth)Acrylat mit einer Säurezahl von 50 bis 400 mg KOH/g, vorzugsweise 100 bis 200 mg KOH/g, in einer Menge von 5 bis 40 Gew.-%, vorzugsweise 9 bis 22 Gew.-%, jeweils bezogen auf die Gesamtmasse an monomeren und/oder oligomeren (Meth)Acrylaten enthält. Die in diesen Mischungen von monomeren und/oder oligomeren (Meth)Acrylaten enthaltenen (Meth)Acrylate können beispielsweise ausgewählt werden aus Polyesteracrylaten, propoxyliertem Neopentylglycoldiacrylat, 2-(2-Ethoxyethoxy)ethylacrylat und Tetrahydrofurfurylacrylat.

Geeignete Polyesteracrylate sind beispielsweise unter den Bezeichnungen Sartomer® CN704, Sartomer® CN2610, Sartomer®203 (Arkema), Genomer® 3611 oder 03-849 (Rahn), Ebecryl® 837, Ebecryl® 892 und Ebecryl® 812 (Allnex) erhältlich.

Propoxyliertes Neopentylglycoldiacrylat ist beispielsweise unter den Bezeichnungen Sartomer® SR9003 (Arkema), Photomer® 4127 (IGM Resins) oder Miramer® M216 (Rahn) erhältlich.

2-(2-Ethoxyethoxy)ethylacrylat ist beispielsweise unter den Bezeichnungen Sartomer® SR256 (Arkema) oder Neopol® 8351 (Japan U-Pica) erhältlich.

Tetrahydrofurfurylacrylat ist beispielsweise unter den Bezeichnungen Sartomer® SR285 (Arkema) oder Viscoat® 150 (Osaka Organic Chemical) erhältlich

Säuremodifizierte (Meth)Acrylate, wie hierin beschrieben, sind beispielsweise unter den Bezeichnungen Sartomer® SR9051, Sartomer® SR9054 (Arkema), Ebecryl® E 171 (Allnex), Genorad® 40 (Rahn), Laromer® PA9039 oder Laromer® PA9083 (BASF SE) erhältlich.

Der Anteil dieser monomeren/oligomeren (Meth)Acrylate an der Formulierung beträgt insbesondere 15 bis 45 Gew.-%, vorzugsweise 25-35 Gew.-%, jeweils bezogen auf die Schmelzklebstoffzusammensetzung.

Die hierin beschriebene Schmelzklebstoffzusammensetzung enthält ferner mindestens einen Photoinitiator, insbesondere UV-Initiator. Es können dabei 0,02 bis 5 Gew.-% wenigstens eines Photoinitiators zugesetzt werden. Im bevorzugten Falle der Bestrahlung mit UV-Strahlung ist mindestens ein Photoinitiator in der Menge von 0,1 Gew.-% bis 3 Gew.-% in der erfindungsgemäßen Zusammensetzung enthalten. Im Rahmen der vorliegenden Erfindung sind grundsätzlich alle handelsüblichen Photoinitiatoren geeignet, die mit dem erfindungsgemäßen Beschichtungsmittel kompatibel sind, d. h. weitgehend homogene Gemische ergeben. Es können sowohl photofragmentierende Initiatoren eingesetzt werden oder kationische Initiatoren. Bevorzugt werden Initiatoren, deren Absorptionsspektren zu den Emissionsspektren der verwendeten UV-Strahler und den Transmissionsspektren der verklebten Folien passen. Besonders beovrzugt werden Mischungen von 2 oder mehr Photoinitiatoren eingesetzt. Geeignet sind beispielsweise die unter der Bezeichnung Irgacure® (BASF) erhältlichen Initiatoren, insbesondere Irgacure® 184 und 819, aber auch die Typen TPO, MBF, 127, 907 und 1173 sind allein oder in Kombination einsetzbar.

In verschiedenen Ausführungsformen enthält die Zusammensetzung jeweils bezogen auf die Gesamtzusammensetzung:
(a) 50 bis 85 Gew.-%, insbesondere 55 bis 75 Gew.-%, des mindestens einen UV-härtbaren Urethan(meth)acrylats;
(b) 15 bis 45 Gew.-%, insbesondere 25 bis 35 Gew.-%, des mindestens einen (Meth)Acrylat-Monomers oder -Oligomers; und
(c) 0,02 bis 5 Gew.-%, insbesondere 0,1 bis 3 Gew.-%, des mindestens einen Photoinitiators.

In bevorzugten Ausführungsformen ergeben die angegebenen Bestandteile dabei 100 Gew.-%.

Ein erfindungsgemäßer Schmelzklebstoff kann aber noch weitere Additive aufweisen. Es handelt sich dabei beispielsweise um Wachse, Harze, Haftvermittler, Stabilisatoren, Antioxidantien, Verlaufsvermittler, Füllstoffe, Netzmittel, Entlüfter, Farbstoffe, Pigmente, Weichmacher oder andere bekannte Hilfsstoffe. Falls derartige Additive enthalten sind, sind diese zusätzlich zu den oben angegebenen Bestandteilen enthalten und die angegebenen Mengen in Gew.-% bezogen auf die Zusammensetzung sind entsprechend anzupassen.

Zugesetzte Harze bewirken eine zusätzliche Klebrigkeit und verbessern die Verträglichkeit der Komponenten. Sie werden in einer Menge von 0 bis 40 Gew.-%, bevorzugt bis 20 Gew.-%, bezogen auf die Gesamtzusammensetzung eingesetzt. Gegebenenfalls können dem Klebstoff Wachse zugesetzt werden. Die Menge kann von 0 bis 20 Gew.-% betragen, insbesondere von 0 bis 10 Gew.-%, bezogen auf die Gesamtzusammensetzung. Das Wachs kann natürlichen, chemisch modifizierten oder synthetischen Ursprungs sein. Weichmacher könne ebenfalls enthalten sein. Die Menge kann bis 20 Gew.-% betragen, vorzugsweise von 0 bis 10 Gew.-%, bezogen auf die Gesamtzusammensetzung. Geeignete Weichmacher sind Öle, Ester von Carbonsäuren oder Kohlenwasserstoffe.

Als Füllstoffe und/oder Pigmente geeignet sind nicht reaktive, feinteilige anorganische Mineralien, diese können gemahlen, gefällt oder an ihrer Oberfläche behandelt sein. Beispiele sind Kreide, beschichtete Kreide, Kalkmehl, Calcium-Magnesium-Carbonate, Aluminiumoxide und -hydroxide, Kieselsäure, Quarz, Titandioxid, Bariumsulfat, Natriumoder Aluminiumsilikate, Zeolithe, Bentonite, Glas, gemahlene Mineralien, soweit diese als Pulver vorliegen. Die Korngröße soll zwischen 1 bis 200 µm betragen, insbesondere zwischen 3 bis 50 µm. Auch nanoskalige Füllstoffe, beispielsweise auf SiO₂- oder TiO₂-Basis, können eingesetzt werden. Auswahl und Menge sind so zu bemessen, dass die notwendige strahlungsinduzierte Reaktion nicht beeinträchtigt wird. Die Menge der Pigmente kann von 10 bis 50 Gew.-% der Zusammensetzung betragen, insbesondere 20 bis 40 Gew.-%, bezogen auf die Gesamtzusammensetzung. Dabei sind insbesondere transparente Füllstoffe geeignet, beispielsweise Quarz, Feldspat oder Nephelin-haltige Mineralien, es kann auch die Strahlenempfindlichkeit des Initiators auf den Füllstoff abgestimmt werden.

Zu im Rahmen der Erfindung als Zusatzstoffe einsetzbaren Stabilisatoren, insbesondere UV-Stabilisatoren, oder Antioxidantien, zählen Phosphite, Phenole, sterisch gehinderte Phenole hohen Molekulargewichts, polyfunktionelle Phenole, schwefel- und phosphorhaltige Phenole oder Amine.

Als Haftvermittler oder Adhäsionspromotoren sind insbesondere silanisierte Adhäsionspromotoren geeignet, die beispielsweise in Mengen von 0,1 bis 3, vorzugsweise 0,4 bis 1 Gew.-%, bezogen auf die Gesamtzusammensetzung eingesetzt werden können. Geeignete Verbindungen schließen Mercaptopropyltrimethoxysilan, Glycidoxypropyltrimethoxysilan oder Aminoethyl-3-aminopropyltrimethoxysilan ein, sind aber nicht darauf beschränkt.

In geringen Mengen bis maximal 10 Gew.-% bezogen auf die Gesamtzusammensetzung können dem erfindungsgemäßen Schmelzklebstoff auch weitere nicht reaktive thermoplastische Polymere zugesetzt werden. Diese weiteren Polymere können Eigenschaften des Klebstoffs beeinflussen, wie Kohäsion, Viskosität, Haftung, Elastizität. Es kann sich um dem Fachmann bekannte Polymere handeln, wie Polyacrylate oder nicht reaktive Polyolefine und Copolymere.

Eine besonders geeignete Klebstoffzusammensetzung enthält 60 bis 85 Gew.-% Urethanacrylat, 15 bis 40 Gew.-% (Meth)Acrylat-Oligomere und/oder -Monomere, 0,1 bis 20 Gew.-% Additive, insbesondere Photoinitiatoren, sowie 0 bis 40 Gew.-% Füllstoffe/Pigmente. Dabei soll die Summe der Bestandteile 100 Gew.-% ergeben.

Dabei können die oben genannten besonders geeigneten Rohstoffe einzeln oder gemeinsam ausgewählt werden. Als Photoinitiatoren und weitere der oben genannten Additive sind insbesondere die geeignet, die in der WO 2009/077865 A1 als solche offenbart und beschrieben werden.

Aus den oben genannten Bestandteilen kann ein erfindungsgemäßer Schmelzklebstoff durch bekannte Verfahren hergestellt werden. Die Bestandteile werden vorzugsweise so ausgewählt, dass der Klebstoff eine Viskosität von 1.000 bis 20.000 mPas aufweist bei einer Temperatur von 130°C, insbesondere von 2.000 bis 10.000 mPas bei 80 bis 120°C. Die Viskosität ist hier, wie auch im Folgenden, diejenige, die mit einem Viskosimeter des Typs Physica Rheolab MC 1 bestimmt wird und zwar unter Verwendung einer Platte/Platte-Anordnung mit 0,2 mm Spalt und einer Scherrate von 20 s⁻¹.

Ein Gegenstand der Erfindung betrifft auch die Verwendung von solchen Schmelzklebstoffen zum Verkleben eines flexiblen Substrats wie beispielsweise einer Folie, insbesondere einer transparenten Folie, mit einem festen Substrat, insbesondere einem Formkörper. Dabei kann der Schmelzklebstoff auf eine oder mehrere Flächen des Substrats oder der Folie aufgetragen werden, die verklebt werden sollen. Es ist notwendig, dass der Schmelzklebstoff durch Aufschmelzen auf eine geeignete Viskosität gebracht wird. Das Auftragen kann beispielsweise durch Extrusion durch eine (Schlitz)Düse, durch Walzenauftrag oder durch Rakel geschehen. Die Klebstoffschicht wird so gewählt, dass eine Schichtdicke vorzugsweise von 20 bis 200 µm erhalten wird.

Nach dem Auftragen ist es gegebenenfalls auch möglich, dass die aufgetragene Schicht zusätzlich geglättet wird. Unmittelbar nach dem Auftrag werden die zu verklebenden Oberflächen in Kontakt gebracht, beispielsweise miteinander verpresst, und die Schicht durch Bestrahlen vernetzt. Das kann mit an sich bekannten Vorrichtungen geschehen, insbesondere ist UV-Strahlung geeignet. Die Bestrahlung soll für einen Zeitraum von 0,3 Sekunden bis 15 Sekunden durchgeführt werden, insbesondere bis 10 Sekunden. Die Bestrahlungsmenge hängt auch von der Intensität des Strahlers und seiner Entfernung von der zu vernetzenden Schicht ab. Im Rahmen dieser Erfindung erfolgt die Vernetzung durch UV-Strahlung. Die Bestrahlung des erfindungsgemäßen Beschichtungsmittels mit UV-Strahlung findet insbesondere bei einer Wellenlänge im Bereich von 200 nm bis 450 nm statt. Die Erzeugung der UV-Strahlen erfolgt durch bekannte Vorrichtungen. Insbesondere sind jedoch UV-LED Strahler geeignet, die eine monochromatische UV-Strahlung erzeugen. Dabei kann eine hohe Strahlendichte und eine gute Vernetzung in der Schichttiefe sichergestellt werden.

Nach dem Vernetzen der Beschichtungsmittelschicht kann der erhaltene Verbund aus Folie und Substrat direkt mechanisch bearbeitet werden, beispielsweise gesägt oder gefräst werden.

Bei dem festen Substrat handelt es sich beispielsweise um einen Formkörper aus Holzwerkstoffen oder Kunststoffen, insbesondere solchen, die mit Melamin oder PVC beschichtet sind. Der Formkörper, bei dem es sich beispielsweise um ein Möbelteil handeln kann, kann ein Oberflächendekor aufweisen, das durch die aufkaschierte, transparente Folie sichtbar bleibt. Die Folie kann eine Hochglanzfolie sein und aus an sich bekannten Materialien bestehen, wie beispielsweise PMMA, PMMA/ABS, Polyestern oder Mischungen der vorgenannten.

Durch die Verwendung eines schnell vernetzbaren UV-härtbaren Schmelzklebstoffs wird die Verarbeitungsgeschwindigkeit erhöht, da lange Lagerzeiten zur Vervollständigung der bekannten Reaktionen nicht notwendig sind. Es ist eine in-line Beschichtung und Verklebung der Substrate möglich. Ferner wird insbesondere auf Melamin- und PVC-haltigen Oberflächen eine gute Adhäsion beobachtet und es wird auch bei Lagerung oder bei Belastung durch Feuchtigkeit keine Delaminierung zwischen der Klebstoffschicht und den verklebten Substraten beobachtet.

Die Erfindung betrifft ebenfalls Verfahren zum Kaschieren eines flexiblen Substrats wie beispielsweise einer Folie, insbesondere einer (transparenten) Folie auf Basis von PMMA und/oder Polyester, auf einen (festen) Formkörper, insbesondere einen mit Melamin oder PVC beschichteten Formkörper, wobei die hierin beschriebene UV-härtbare Schmelzklebstoffzusammensetzung auf eine Oberfläche des Formkörpers, eine Oberfläche der Folie oder beide aufgetragen und der Formkörper und die Folie anschließend verklebt werden. Dabei können der Auftrag und die Verklebung wie bereits oben im Zusammenhang mit der erfindungsgemäßen Verwendung beschrieben erfolgen.

Die Erfindung erfasst ferner die durch diese Verfahren hergestellten oder herstellbaren Verbünde.

Alle hierin im Zusammenhang mit dem Schmelzklebstoff offenbarten Ausführungsformen sind auch auf die beschriebenen Verwendungen und Verfahren anwendbar und umgekehrt.

Nachfolgend soll die Erfindung an einigen exemplarischen Beispielen näher erläutert werden. Dabei sind die angegeben Mengen Gewichtsprozent, falls nicht anders angegeben.

### Beispiele

### Vergleichsbeispiel:

20 g Voranol 2000L (Polypropylenglykol), 5 g Dynacoll 7360 (Polyesterpolyol), 13 g Elvacite 2013 (Methylmethacrylat/Butylmethacrylat Copolymer) und 1 g Irganox 1010 (Antioxidans) wurden in einem Glasreaktor eingewogen und langsam unter Rühren und Vakuum auf 130-140°C erhitzt bis sich das Methacrylat-Copolymer im Polypropylenglykol aufgelöst hatte. Anschließend wurden 0,1 g phosphorige Säure sowie 5,5 g IPDI (Desmodur I von Bayer) zugegeben und eingemischt. Das Produkt wurde auf 100-110 °C temperiert und anschließend 0,5 g des Katalysators DBTL dosiert. Die Reaktionszeit unter Schutzgasatmosphäre betrug 60-120 Minuten, danach hatte das Präpolymer einen NCO-Gehalt von 2,4 % und eine Viskosität von 10.000 mPas bei 110°C.

Im nächsten Schritt wurden bei einer Reaktionstemperatur von ca. 110°C die hydroxyfunktionalisierten Acrylate zugegeben, zuerst 4g Bisomer PPA6, danach 4g Ebecryl 3700 und danach 12 g Sartomer SR444 und 4g DPHA. Ca. 30 Minuten nach der letzten Acrylatzugabe lag der NCO-Gehalt bei 0 %. Danach wurden die UV-Initiatoren Irgacure 184 sowie Irgacure 819 (BASF) in Mengen von je 0,75 g gemeinsam mit 2g des Acrylatstabilisators Irgastab UV22 (BASF) eingemischt.

Der hergestellte Schmelzklebstoff hatte eine Schmelzviskosität von 15.000 mPas bei 110°C, eine Reißdehnung von 10% und eine Reißfestigkeit von ca. 12 MPa nach der Norm DIN EN 527, gemessen 24 h nach der Aushärtung. Die Shorehärte D lag bei ca. 65 (DIN ISO 7619-1:2012-02).

Bei der Applikation und Aushärtung dieses Klebstoffs auf einer Melaminoberfläche kam es beim "Tesatest" (DIN EN ISO 2409) zur Ablösung des Klebstofffilms von der Melaminoberfläche (Gitterschnittwert GT 4-5).

### Beispiel 1 (erfindungsgemäß)

90 g Voranol 2000L (Polypropylenglykol), 15 g Dynacoll 7360 (Polyesterpolyol), 45 g Elvacite 2013 (Methymethacrylat/Butylmethacrylat Copolymer) und 4 g Irganox 1010 (Antioxidans) wurden in einem Glasreaktor eingewogen und langsam unter Rühren und Vakuum auf 130-140°C erhitzt bis sich das Methacrylat-Copolymer im Polypropylenglykol aufgelöst hatte. Anschließend wurden 10g AC540 und 10g AC578 (modifizierte PE-Wachse; Honeywell) zugegeben und homogenisiert. Dann wurden 0,5 g phosphorige Säure sowie 19g IPDI (Desmodur I von Bayer) zugegeben und eingemischt. Das Produkt wurde auf 100-110 °C temperiert und anschließend 2g des Katalysators DBTL dosiert. Die Reaktionszeit unter Schutzgasatmosphäre betrug ca. 60-120 Minuten, danach hatte das Präpolymer einen NCO-Gehalt von 1,4 % und eine Viskosität von 16.000 mPas bei 110°C.

Im nächsten Schritt wurden bei einer Reaktionstemperatur von ca. 110°C die hydroxyfunktionalisierten Acrylate zugegeben, zuerst 5 g Bisomer PPA6, danach 5 g Ebecryl 3700 und danach 20 g PETIA von Allnex. Ca. 30 Minuten nach der letzten Acrylatzugabe lag der NCO-Gehalt bei 0 %. Danach wurden bei einer Massetemperatur von 100°C schrittweise die folgenden Acrylate zugegeben: 25 g Sartomer CN704, 35 g Ebecryl 812, 40 g Photomer 4127, 10 g Sartomer SR256, 15g Viscoat 150 und 20g Ebecryl E 171. Danach wurden die UV-Initiatoren Irgacure 184 sowie Irgacure 819 (BASF) in Mengen von je 2 g gemeinsam mit 2 g des Acrylatstabilisators Irgastab UV22 (BASF) und je 2 g der Silane Silquest A187 und A189 (Momentive Performance Materials) eingemischt.

Der hergestellte Schmelzklebstoff hatte eine Schmelzviskosität von 5.000 mPas bei 110°C, eine Reißdehnung von 100% und eine Reißfestigkeit von ca. 6 MPa nach der Norm DIN EN 527, gemessen 24 h nach der Aushärtung. Die Shorehärte D lag bei ca. 45.

Bei der Applikation und Aushärtung dieses Klebstoffs auf einer Melaminoberfläche kam es beim "Tesatest" (DIN EN ISO 2409) zu keiner Ablösung des Klebstofffilms von der Melaminoberfläche (Gitterschnittwert GT 0-1).

### Beispiel 2: Applikation

Der erfindungsgemäße Schmelzklebstoff nach Beispiel 1 wurde mittels einer Düse bei 100°C auf eine transparente Folie (Senosan ABS/PMMA Hochglanz Acryl AM 1800 TopX) aufgetragen. Die Auftragsmenge lag bei 30 g/m². Mit der gleichen Temperatur wurde die Folie dann mit einem Liniendruck von 50 N/mm auf die melaminbeschichtete Platte aufgepresst. Die Andruckrolle sowie die Melaminplatte wiesen dabei die gleiche Temperatur auf. Die Vorschubgeschwindigkeit lag bei 8 m/min. Unmittelbar danach wird die Beschichtung mit einem UV-Strahler (Ga-dotierte Quecksilberdampfdrucklampe) mit einer Leistung von ca. 100 W/cm bestrahlt wobei die Vorschubgeschwindigkeit beibehalten wird.

## Patentansprüche

1. UV-härtbare Schmelzklebstoffzusammensetzung enthaltend
(a) mindestens ein UV-härtbares Urethan(meth)acrylat, wobei das Urethan(meth)acrylat erhältlich ist durch das Umsetzen eines NCO-funktionellen Polyurethan-Präpolymers mit einem molaren Überschuss hydroxy- und/oder amin-modifizierter (Meth)Acrylate;
(b) mindestens ein (Meth)Acrylat-Monomer oder -Oligomer, wobei das mindestens eine (Meth)Acrylat-Monomer oder -Oligomer ein säuremodifiziertes (Meth)Acrylat mit einer Säurezahl von 50 bis 400 mg KOH/g, vorzugsweise 100 bis 200 mg KOH/g, umfasst; und
(c) mindestens einen Photoinitiator.

2. UV-härtbare Schmelzklebstoffzusammensetzung nach Anspruch 1, **dadurch gekennzeichnet, dass** die Zusammensetzung jeweils bezogen auf die Gesamtzusammensetzung enthält:
(a) 50 bis 85 Gew.-%, insbesondere 55 bis 75 Gew.-%, des mindestens einen UV-härtbaren Urethan(meth)acrylats;
(b) 15 bis 45 Gew.-%, insbesondere 25 bis 35 Gew.-%, des mindestens einen (Meth)Acrylat-Monomers oder -Oligomers; und
(c) 0,02 bis 5 Gew.-%, insbesondere 0,1 bis 3 Gew.-%, des mindestens einen Photoinitiators.

3. UV-härtbare Schmelzklebstoffzusammensetzung nach Anspruch 1 oder 2, **dadurch gekennzeichnet, dass** das mindestens eine (Meth)Acrylat-Monomer oder -Oligomer eine Mischung von monomeren und/oder oligomeren (Meth)Acrylaten ist, die das mindestens eine säuremodifizierte (Meth)Acrylat mit einer Säurezahl von 50 bis 400 mg KOH/g, vorzugsweise 100 bis 200 mg KOH/g, in einer Menge von 5 bis 40 Gew.-%, vorzugsweise 9 bis 22 Gew.-%, jeweils bezogen auf die Gesamtmasse an monomeren und/oder oligomeren (Meth)Acrylaten enthält.

4. UV-härtbare Schmelzklebstoffzusammensetzung nach Anspruch 3, **dadurch gekennzeichnet, dass** die Mischung von monomeren und/oder oligomeren (Meth)Acrylaten ferner ein oder mehrere (Meth)Acrylate enthält, die ausgewählt werden aus Polyesteracrylaten, propoxyliertem Neopentylglycoldiacrylat, 2-(2-ethoxyethoxy)ethylacrylat und Tetrahydrofurfurylacrylat.

5. UV-härtbare Schmelzklebstoffzusammensetzung nach einem der Ansprüche 1 bis 4, **dadurch gekennzeichnet, dass** das NCO-funktionelle Polyurethan-Präpolymer durch Umsetzen
(a) mindestens eines Polyetherpolyols, mindestens eines Polyesterpoylols, oder einer Mischung der vorgenannten; und optional eines Hydroxy- oder Carboxygruppen-haltigen (Meth)Acrylats, eines Copolymers von Polyethylen mit Maleinsäureanhydrid oder Acrylsäure, und/oder eines oxidierten Polyethylenwachses; mit
(b) einem stöchiometrischen Überschuss von mindestens einem Polyisocyanat erhalten wird.

6. UV-härtbare Schmelzklebstoffzusammensetzung nach Anspruch 5, **dadurch gekennzeichnet, dass**
(d) das Polyetherpolyol ein Polypropylenlgykol, insbesondere mit einem Molekulargewicht Mw von etwa 2000 g/mol und einer Hydroxylzahl von etwa 50 bis 60 mg KOH/g ist;
(e) das Polyesterpolyol ein Copolyester auf Basis von 1,6-Hexandiol und Adipinsäure oder 1,12-Dodecandisäure, insbesondere mit einer Hydroxylzahl von 25 bis 35 mg KOH/g ist;
(f) das Hydroxy- oder Carboxygruppen-haltige (Meth)Acrylat ein hydroxy-modifiziertes Methlymethacrylat/Butylmethacrylat Copolymer ist;
(g) das Copolymer von Ethylen mit Maleinsäureanhydrid oder Acrylsäure, ein Polyethylenwachs mit 1-5 Gew.-% Maleinsäurenanhydrideinheiten und/oder 5-20 Gew.-% Acrylsäureeinheiten, bezogen auf das Copolymer, ist;
(h) das mindestens eine Polyisocyanat ausgewählt wird aus Diisocyanaten, polymeren Isocyanaten und bifunktionellen Präpolymeren aus Polyester und Diisocyanaten; und/oder
(i) der stöchiometrische Überschuss von Polyisocyanat bezogen auf das molare Verhältnis von NCO- zu OH-Gruppen 1,25:1 bis 2,5:1, vorzugsweise 1,5:1 bis 2:1 beträgt.

7. UV-härtbare Schmelzklebstoffzusammensetzung nach einem der Ansprüche 1 bis 6, **dadurch gekennzeichnet, dass** die zur Herstellung des mindestens einen UV-härtbaren Urethanacrylats verwendeten hydroxy- und/oder amin-modifizierten (Meth)Acrylate monomere und/oder oligomere (Meth)acrylate mit einer Acrylatfunktionalität von 1-6 und einer Hydroxy- und/oder Aminfunktionalität von 1-4 sind, insbesondere ausgewählt aus Propylenglycolacrylat, 2-Hydroxyethylacrylat, Epoxyacrylaten, insbesondere Bisphenol A Epoxydiacrylat, aliphatischen und aromatischen Urethanacrylaten, optional ethoxyliertem Pentaerythritol-Tri- und/oder -Tetraacrylatestern, Dipentaerythritol-Penta- und/oder Hexaacrylatestern und Caprolactonacrylat.

8. UV-härtbare Schmelzklebstoffzusammensetzung nach einem der Ansprüche 1 bis 7, **dadurch gekennzeichnet, dass** das mindestens eine UV-härtbare Urethanacrylat
(j) ein Molekulargewicht Mw von mehr als 2000 g/mol, insbesondere im Bereich 5000 bis 30000 g/mol, aufweist; und/oder
(k) eine Hydroxylzahl im Bereich von 1 bis 50 mg KOH/g, insbesondere 1 bis 8 mg KOH/g, aufweist.

9. UV-härtbare Schmelzklebstoffzusammensetzung nach einem der Ansprüche 1 bis 8, **dadurch gekennzeichnet, dass** die Zusammensetzung ferner eine oder mehrere Verbindungen enthält, die ausgewählt werden aus der Gruppe bestehend aus Wachsen, Harzen, Haftvermittlern, Stabilisatoren, Antioxidantien, Verlaufsvermittlern, Füllstoffen, Netzmitteln, Entlüftern, Farbstoffen, Pigmenten und Weichmachern.

10. Verfahren zum Kaschieren einer Folie, insbesondere einer Folie auf Basis von PMMA und/oder Polyester, auf einen Formkörper, insbesondere einen mit Melamin oder PVC beschichteten Formkörper, **dadurch gekennzeichnet, dass** die UV-härtbare Schmelzklebstoffzusammensetzung nach einem der Ansprüche 1 bis 9 auf eine Oberfläche des Formkörpers, eine Oberfläche der Folie oder beide aufgetragen und der Formkörper und die Folie anschließend verklebt werden.

11. Verbund aus einem Formkörper, insbesondere einem Formkörper mit Melamin- oder PVC-Beschichtung, und einer damit verklebten Folie hergestellt nach dem Verfahren gemäß Anspruch 10.

12. Verwendung der UV-härtbaren Schmelzklebstoffzusammensetzung nach einem der Ansprüche 1 bis 9 zur Verklebung einer Folie mit einem Formkörper.

## Claims

1. A UV-curable hot-melt adhesive composition containing
(a) at least one UV-curable urethane (meth)acrylate, wherein the urethane (meth)acrylate can be obtained by reacting an NCO-functional polyurethane prepolymer with a molar excess of hydroxy-modified and/or amine-modified (meth)acrylates;
(b) at least one (meth)acrylate monomer or oligomer, wherein the at least one (meth)acrylate monomer or oligomer comprises an acid-modified (meth)acrylate having an acid number of from 50 to 400 mg KOH/g, preferably from 100 to 200 mg KOH/g; and
(c) at least one photoinitiator.

2. The UV-curable hot-melt adhesive composition according to claim 1, **characterized in that** the composition contains, in each case based on the total composition:
(a) 50 to 85 wt.%, in particular 55 to 75 wt.%, of the at least one UV-curable urethane (meth)acrylate;
(b) 15 to 45 wt.%, in particular 25 to 35 wt.%, of the at least one (meth)acrylate monomer or oligomer; and
(c) 0.02 to 5 wt.%, in particular 0.1 to 3 wt.%, of the at least one photoinitiator.

3. The UV-curable hot-melt adhesive composition according to claim 1 or 2, **characterized in that** the at least one (meth)acrylate monomer or oligomer is a mixture of monomeric and/or oligomeric (meth)acrylates which contains the at least one acid-modified (meth)acrylate having an acid number of from 50 to 400 mg KOH/g, preferably from 100 to 200 mg KOH/g, in an amount of from 5 to 40 wt.%, preferably from 9 to 22 wt.%, in each case based on the total weight of monomeric and/or oligomeric (meth)acrylates.

4. The UV-curable hot-melt adhesive composition according to claim 3, **characterized in that** the mixture of monomeric and/or oligomeric (meth)acrylates further contains one or more (meth)acrylates selected from polyester acrylates, propoxylated neopentyl glycol diacrylate, 2-(2-ethoxyethoxy)ethyl acrylate and tetrahydrofurfuryl acrylate.

5. The UV-curable hot-melt adhesive composition according to one of claims 1 to 4, **characterized in that** the NCO-functional polyurethane prepolymer is obtained by reacting
(a) at least one polyether polyol, at least one polyester polyol, or a mixture thereof; and optionally a (meth)acrylate which contains hydroxy or carboxy groups, a copolymer of polyethylene with maleic anhydride or acrylic acid and/or an oxidized polyethylene wax; with
(b) a stoichiometric excess of at least one polyisocyanate.

6. The UV-curable hot-melt adhesive composition according to claim 5, **characterized in that**
(d) the polyether polyol is a polypropylene glycol, in particular having a molecular weight Mw of approximately 2,000 g/mol and a hydroxyl number of approximately from 50 to 60 mg KOH/g;
(e) the polyester polyol is a copolyester based on 1,6-hexanediol and adipic acid or 1,12-dodecanedioic acid, in particular having a hydroxyl number of from 25 to 35 mg KOH/g;
(f) the (meth)acrylate which contains hydroxy or carboxy groups is a hydroxy-modified methyl methacrylate/butyl methacrylate copolymer;
(g) the copolymer of ethylene with maleic anhydride or acrylic acid is a polyethylene wax having from 1 to 5 wt.% maleic anhydride units and/or from 5 to 20 wt.% acrylic acid units, based on the copolymer;
(h) the at least one polyisocyanate is selected from diisocyanates, polymeric isocyanates and bifunctional prepolymers consisting of polyester and diisocyanates; and/or
(i) the stoichiometric excess of polyisocyanate, based on the molar ratio of NCO to OH groups, is from 1.25:1 to 2.5:1, preferably from 1.5:1 to 2:1.

7. The UV-curable hot-melt adhesive composition according to one of claims 1 to 6, **characterized in that** the hydroxy-modified and/or amine-modified (meth)acrylates used to produce the at least one UV-curable urethane acrylate are monomeric and/or oligomeric (meth)acrylates having an acrylate functionality of from 1 to 6 and a hydroxy and/or amine functionality of from 1 to 4, in particular selected from propylene glycol acrylate, 2-hydroxyethyl acrylate, epoxy acrylates, in particular bisphenol A epoxy diacrylate, aliphatic and aromatic urethane acrylates, optionally ethoxylated pentaerythritol-tri and/or tetraacrylate esters, dipentaerythritol-penta and/or hexaacrylate esters and caprolactone acrylate.

8. The UV-curable hot-melt adhesive composition according to one of claims 1 to 7, **characterized in that** the at least one UV-curable urethane acrylate
(j) has a molecular weight Mw of more than 2,000 g/mol, in particular in the range of from 5,000 to 30,000 g/mol; and/or
(k) has a hydroxyl number in the range of from 1 to 50 mg KOH/g, in particular from 1 to 8 mg KOH/g.

9. The UV-curable hot-melt adhesive composition according to one of claims 1 to 8, **characterized in that** the composition further contains one or more compounds selected from the group consisting of waxes, resins, adhesion promoters, stabilizers, antioxidants, flow promoters, fillers, wetting agents, deaerators, dyes, pigments and plasticizers.

10. A method for laminating a film, in particular a film based on PMMA and/or polyester, onto a shaped body, in particular a shaped body coated with melamine or PVC, **characterized in that** the UV-curable hot-melt adhesive composition according to one of claims 1 to 9 is applied to a surface of the shaped body, to a surface of the film or to both, and the shaped body and the film are then adhered together.

11. A composite made up of a shaped body, in particular a shaped body having a melamine or PVC coating, and a film adhered thereto, produced using the method according to claim 10.

12. The use of the UV-curable hot-melt adhesive composition according to one of claims 1 to 9 for adhering a film to a shaped body.

## Revendications

1. Composition adhésive thermofusible durcissable aux UV contenant
(a) au moins un (méth)acrylate d'uréthane durcissable aux UV, le (méth)acrylate d'uréthane pouvant être obtenu en faisant réagir un prépolymère de polyuréthane à fonctionnalité NCO avec un excès molaire en (méth)acrylates modifiés par des groupes hydroxy et/ou aminé ;
(b) au moins un monomère ou un oligomère de (méth)acrylate, l'au moins un monomère ou un oligomère de (méth)acrylate étant un (méth)acrylate modifié par un acide présentant un indice d'acidité de 50 à 400 mg KOH/g, de préférence de 100 à 200 mg KOH/g ; et
(c) au moins un photoinitiateur.

2. Composition adhésive thermofusible durcissable aux UV selon la revendication 1, **caractérisée en ce que** la composition contient, à chaque fois par rapport à la composition totale :
(a) de 50 à 85 % en poids, en particulier de 55 à 75 % en poids, de l'au moins un (méth)acrylate d'uréthane durcissable aux UV ;
(b) de 15 à 45 % en poids, en particulier de 25 à 35 % en poids de l'au moins un monomère ou un oligomère de (méth)acrylate ; et
(c) de 0,02 à 5 % en poids, en particulier de 0,1 à 3 % en poids, de l'au moins un photoinitiateur.

3. Composition adhésive thermofusible durcissable aux UV selon la revendication 1 ou 2, **caractérisée en ce que** l'au moins un monomère ou un oligomère de (méth)acrylate est un mélange de (méth)acrylates monomériques et/ou oligomériques qui contient l'au moins un (méth)acrylate modifié par un acide présentant un indice d'acidité de 50 à 400 mg de KOH/g, de préférence de 100 à 200 mg de KOH/g, à raison d'une quantité de 5 à 40 % en poids, de préférence de 9 à 22 % en poids, à chaque fois par rapport à la masse totale de (méth)acrylates monomériques et/ou oligomériques.

4. Composition adhésive thermofusible durcissable aux UV selon la revendication 3, **caractérisée en ce que** le mélange de (méth)acrylates monomériques et/ou oligomériques contient en outre un ou plusieurs (méth)acrylates choisis parmi les acrylates de polyester, le diacrylate de néopentylglycol propoxylé, le 2-(2-éthoxyéthoxy)acrylate d'éthyle et l'acrylate de tétrahydrofurfuryle.

5. Composition adhésive thermofusible durcissable aux UV selon l'une des revendications 1 à 4, **caractérisée en ce que** le prépolymère de polyuréthane à fonction NCO est obtenu par la réaction
(a) d'au moins un polyéther de polyol, d'au moins un polyester de polyol ou d'un mélange de ceux-ci ; et éventuellement d'un (méth)acrylate contenant des groupes hydroxy ou carboxy, d'un copolymère de polyéthylène avec de l'anhydride d'acide maléique ou de l'acide acrylique, et/ou une cire de polyéthylène oxydée ; avec
(b) un excès stoechiométrique d'au moins un polyisocyanate.

6. Composition adhésive thermofusible durcissable aux UV selon la revendication 5, **caractérisée en ce que**
(d) le polyéther de polyol est un polypropylèneglycol, en particulier présentant un poids moléculaire Mw d'environ 2 000 g/mol et un indice d'hydroxyle d'environ 50 à 60 mg KOH/g ;
(e) le polyester de polyol est un copolyester à base de 1,6-hexanediol et d'acide adipique ou d'acide 1,12-dodécanedioïque, en particulier en particulier présentant un indice d'hydroxyle de 25 à 35 mg KOH/g ;
(f) le (méth)acrylate contenant des groupes hydroxy ou carboxy est un copolymère de méthacrylate de méthyle / de méthacrylate de butyle modifié par un hydroxy ;
(g) le copolymère d'éthylène présentant de l'anhydride d'acide maléique ou de l'acide acrylique est une cire de polyéthylène présentant de 1 à 5 % en poids d'unités d'anhydride d'acide maléique et/ou 5 à 20 % en poids d'unités d'acide acrylique, par rapport au copolymère ;
(h) l'au moins un polyisocyanate est choisi parmi les diisocyanates, les isocyanates polymériques et les prépolymères bifonctionnels de polyester et de diisocyanates ; et/ou
(i) l'excès stoechiométrique de polyisocyanate par rapport au rapport molaire des groupes NCO aux groupes OH est de 1,25:1 à 2,5:1, de préférence de 1,5:1 à 2:1.

7. Composition adhésive thermofusible durcissable aux UV selon l'une quelconque des revendications 1 à 6, **caractérisée en ce que** les (méth)acrylates modifiés par un hydroxy et/ou une amine utilisés pour la préparation de l'au moins un acrylate d'uréthane durcissable aux UV sont des (méth)acrylates monomériques et/ou oligomériques présentant une fonctionnalité d'acrylate de 1 à 6 et une fonctionnalité d'hydroxy et/ou d'amine de 1 à 4, en particulier choisis parmi l'acrylate de propylèneglycol, l'acrylate de 2-hydroxyéthyle, les acrylates d'époxy, en particulier le diacrylate d'époxy de bisphénol A, les acrylates d'uréthane aliphatiques et aromatiques, éventuellement les esters de triacrylate et/ou de tétraacrylate de pentaérythritol, les esters de pentaacrylate et/ou d'hexaacrylate de dipentaérythritol et l'acrylate de caprolactone.

8. Composition adhésive thermofusible durcissable aux UV selon l'une des revendications 1 à 7, **caractérisée en ce que** l'au moins un acrylate d'uréthane durcissable aux UV (j) présente un poids moléculaire Mw supérieur à 2 000 g/mol, en particulier dans la plage de 5 000 à 30 000 g/mol ; et/ou
(k) présente un indice d'hydroxyle dans la plage de 1 à 50 mg de KOH/g, en particulier de 1 à 8 mg de KOH/g.

9. Composition adhésive thermofusible durcissable aux UV selon l'une quelconque des revendications 1 à 8, **caractérisée en ce que** la composition contient en outre un ou plusieurs composés choisis dans le groupe constitué par les cires, les résines, les agents liants, les stabilisants, les antioxydants, les agents d'égalisation, les charges, les agents humidifiants, les désaérants, les colorants, les pigments et les plastifiants.

10. Procédé de laminage d'un film, en particulier d'un film à base de PMMA et/ou de polyester, sur un corps moulé, en particulier un corps moulé revêtu de mélamine ou de PVC, **caractérisé en ce que** la composition adhésive thermofusible durcissable aux UV selon l'une des revendications 1 à 9 est appliquée sur une surface du corps moulé, une surface du film ou les deux, et le corps moulé et le film sont ensuite collés.

11. Composite d'un corps moulé, en particulier d'un corps moulé avec un revêtement de mélamine ou de PVC, et d'un film collé à celui-ci produit par le procédé selon la revendication 10.

12. Utilisation de la composition adhésive thermofusible durcissable aux UV selon l'une des revendications 1 à 9 pour coller un film sur un corps moulé.
